# EUROPÄISCHE PATENTANMELDUNG

(11) **EP 3 474 403 A1**
(43) Veröffentlichungstag der Anmeldung: **24.04.2019**
(21) Anmeldenummer: 18200628.8
(22) Anmeldetag: 16.10.2018
(51) Int. Cl.: H02G 3/22, E04B 1/68, F16L 5/02

(54) **MEHRWEG-ABDICHTUNG**

(30) Priorität: 19.10.2017 EP 17197224
(71) Anmelder: Wolf, Roland, 70437 Stuttgart (DE)
(72) Erfinder: Wolf, Roland, 70437 Stuttgart (DE)
(74) Vertreter: Jeck, Anton

(57) **Zusammenfassung**

Die vorliegende Erfindung betrifft eine Vorrichtung zur temporären Mehrweg-Abdichtung für Montagen bei fließendem oder stehendem Wasser gegen Wassereintritt und Rauchdurchdringung in Fugen mit zumindest zwei gegenüberliegenden Wandteilen, insbesondere Zwischenräumen, Hohlräumen, Kabelschutzrohren oder Wanddurchführungen, die mit Kabeln und/oder Rohren belegt sind, oder in Dehn- und/oder Bewegungsfugen, Auflagerbänken, wobei die Vorrichtung ein in der Länge und Breite festgelegtes Flachschlauchabdichtkissen aufweist, das als Zwischenraumabdichtung an seinen Außenseiten mit einem Brandschutz-Hitzeschutz-Band und/oder Zellkautschuk-Dichtband, welche vorzugsweise mit Quellvlies modifiziert sind, ausgerüstet ist, das an einer Breitseite mit einem Reifenventil oder Thermoplast-Einfüllschlauch verschweißt ist, das mit einem gasförmigem Medium befüllt und überdruckdicht mit einer Crimphülse in Kombination mit einer Crimpzange verschlossen ist, wobei das Flachschlauchabdichtkissen mit einer Leckrate von ≤ 8,561643835616438.10⁻⁸Pa·m³·s⁻¹ bereitgestellt ist, und dass die Vorrichtung zwischen den Wandteilen der Fuge vorsehbar ist.

## Beschreibung

Die Erfindung betrifft eine Vorrichtung zur temporären Mehrweg-Kabel- oder Fugen-Abdichtung gemäß Anspruch 1 für Montagen, insbesondere bei fließendem oder stehendem Wasser, gegen Wassereintritt, Rauchdurchdringung und/oder als Hitzeschutz in Zwischenräumen und in Hohlräumen, Kabelschutzrohren und Wanddurchführungen, die mit Kabeln und/oder Rohren belegt oder in Dehn- und/oder Bewegungsfugen von Bauwerken gegen Eiszapfen- und Glatteisbildung anwendbar sind.

Vorteil der erfindungsgemäßen Vorrichtung, insbesondere der Fugen-Abdichtkombination gemäß Anspruch 1 ist eine Abdichtung insbesondere von Bewegungsfugen gegen Wasser- und/oder Feuerwiderstand, insbesondere bei großen Fugenbreiten, und Bewegungen in Brücken, Tunneln (beispielsweise S 21-Tunneln), Gebäuden etc.

Dabei können relativ Bewegungen von Fugen in der X-Achse vorzugsweise von bis etwa 200 mm realisiert werden.

Mit dem Fugen-Abdichtkissen kann ein BHB (Brandschutz-Hitzeschutz-Band) in die Fugenkammer einer Fuge gepresst werden, beispielsweise zwischen Kissen und Wand, insbesondere aufgrund des Anpressdrucks des gefüllten Kissens auf die Fugeninnenseite, eingeklemmt festgelegt sein. Es gibt nach dem Stand der Technik bisher keine Möglichkeit, in einer beispielsweise 3 bis 10 cm breiten Fugenkammer ein BHB oder eine gleichwertige Feuerschutzeinrichtung anzuschrauben oder anzugkleben.

Grundsätzlich können erfindungsgemäß mehrere BHB übereinander angeordnet vorgesehen sein.

In der EP 1686 670 B1 ist eine wiederverwendbare Vorrichtung zum Abdichten von Zwischenräumen, Anheben oder Sichern von Werkstücken beschrieben.

In der EP 1867 904 B1 ist eine wiederverwendbare Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden beschrieben.

In der PCT/EP 2016/052784 ist eine wiederverwendbare Schutzvorrichtung gegen Wasser- und Rauchfortleitung in Kanälen und Gewerken beschrieben.

Die PCT/EP 2017/065542, EP 1 867 904 B1 lehrt ein wiederverwendbares Flachschlauchkissen zum Abdichten von Hohlräumen mit einem Ventil. Die Verwendung eines abdichtenden Quellvlies-Dichtbands, von Crimphülsen zum druckdichten Verschließen sowie eines thermoplastischen Einfüllschlauchs gehen aus ihr nicht hervor.

Die PCT/EP 2016/052784, EP 16 712 216.7, CN 2016 8000 9874.0, IN 2017 1703 1526, US 15 549 670 offenbart eine wiederverwendbare Vorrichtung zum Schutz vor Wassereintritt in Zwischenräumen und in Hohlräumen von Dehn- und Bewegungsfugen und Gebäuden, welche als Flachschlauchkissen mit einem Reifenventil vorgesehen ist, mit welchem die Vorrichtung mit Luft oder gasförmigem Medium befüllbar ist.

Die WO 2016/128 435 offenbart ein Flachschlauchkissen mit Dichtmittel, welches über ein Druckluftventil je nach Anforderung befüllt oder evakuiert werden kann. Die Verwendung von Crimphülsen zum druckdichten Verschließen sowie eines druckdicht verschweißbaren thermoplastischen Einfüllschlauchs gehen aus ihr nicht hervor.

Die DE 103 41 005 A1 lehrt eine Abdicht-, Hebe- und/oder Sicherungs-vorrichtung, welche als Flachschlauchkissen ausgebildet ist und mit druckfesten Verschlüssen an den Enden versehen ist. Seitlich ist an dem Flachschlauchkissen ein Ventil vorgesehen, mittels welchem die Vorrichtung mit einem Gas oder einer Flüssigkeit befüllbar ist. Bei dem Ventil handelt es sich um einen wiederverwend-baren Einlass für Füllmaterial. Die Verwendung eines Quellvlies-Dichtbands geht aus ihr nicht hervor.

Die EP 3 056 621 A1 lehrt eine Vorrichtung zum Schutz vor Wassereintritt und Feuchtedurchdringung in Zwischenräumen und in Hohlräumen durch Dehnfugen. Die Vorrichtung ist aus einem in der Länge und Breite festgelegten Flachschlauchkissen gebildet, welches mit einem Quellfließ versehen ist, das an der Längsseite und der Kehrseite zugfeste Verschlüsse aufweist und mit Kunststoff beschichtetes metallenes Druckluftventil befüllt oder evakuiert wird.

Die GB 2 13349 8 A offenbart ein Kissen, welches aus einem Endlosschlauch gebildet wird, wobei das vordere und hintere Ende jedes Schlauchsegments mittels Schweißens, Nähens oder Crimphülse verschlossen werden können.

Aufgabe der vorliegenden Erfindung ist es, aus Verbundfolie mit oder ohne metallische Einlage eine besonders dichte Mehrweg-Abdichtung bei fließendem oder stehendem Wasser gegen Wasserfortleitung/Eiszapfen- und Glatteisbildung zu schaffen.

Diese Aufgabe wird mit den Merkmalen des Anspruchs 1 gelöst.

Vorteile dieser Ausgestaltung sind ihre einfache Montage bei fließendem oder stehendem Wasser, sowie ihre einfache Demontage, erneute Montage und unkritische Entsorgung.

Erfindungsgemäß ist eine Vorrichtung zur temporären Mehrweg-Abdichtung für Montagen bei fließendem oder stehendem Wasser gegen Wassereintritt und Rauchdurchdringung in Fugen mit zumindest zwei gegenüberliegenden Wandteilen, insbesondere Zwischenräumen, Hohlräumen, Kabelschutzrohren oder Wanddurchführungen, die mit Kabeln und/oder Rohren belegt sind, oder in Dehn- und/oder Bewegungsfugen, Auflagerbänken, beansprucht.

Erfindungsgemäß ist es vorgesehen, dass die Vorrichtung ein in der Länge und Breite festgelegtes Flachschlauchabdichtkissen aufweist, das als Zwischenraumabdichtung an seinen Außenseiten mit einem Zellkautschuk-Dichtband und/oder einem Brandschutz-Hitzeschutz-Band, welche vorzugsweise mit Quellvlies modifiziert sind, ausgerüstet ist, das an mindestens einer Breitseite mit einem Reifenventil oder Thermoplast-Einfüllschlauch verschweißt ist, das mit einem gasförmigem Medium befüllt und überdruckdicht mit einer Crimphülse in Kombination mit einer Crimpzange verschlossen ist, wobei das Flachschlauchabdichtkissen mit einer Leckrate von ≤ 8,561643835616438·10-8 Pa·m³·s-1 bereitgestellt ist, und dass die Vorrichtung zwischen den Wandteilen der Fuge vorsehbar ist.

Eine erste vorteilhafte Ausgestaltung der Erfindung ist dadurch gekennzeichnet, dass eine ein- oder mehrlagige Anordnung des Flachschlauchabdicht-kissens in dem Zwischenraum und/oder in dem Hohlraum vorgesehen ist, wobei der Thermoplast-Einfüllschlauch oder ein Reifenventil für eine Summenleckrate von ≤ 8,561643835616438·10⁻⁸ Pa·m³·s⁻¹ im Heißsiegelschweißverfahren mit dem Flachschlauchabdichtkissen verbunden ist, wobei die Dichtigkeit des Thermoplast-Einfüllschlauchs durch Verklemmen mittels Crimphülse, vorzugsweise in Kombination mit Crimpzange, bis 300000 Pa überdruckdicht erzielbar ist. Besonders bevorzugt liegt die Weiterentwicklung darin, dass das Flachschlauchabdichtkissen über den Thermoplast-Einfüllschlauch oder über ein Reifenventil mit einem gasförmigen Medium gefüllt ist und der bis 300000 Pa überdruckdichte Einfüllschlauch durch Verpressen mittels Crimphülse in Kombination mit einer Crimpzange hergestellt ist. Diese Lösung ist weitgehend temperaturunabhängig und überdruckdicht. Eine Dichtigkeit des Flachschlauchabdichtkissens kann demnach durch Aufeinanderpressen beziehungsweise Zusammenpressen der Innenwandung des thermoplastischen Einfüllschlauchs mittels einer den Schlauch umgebenden, vorzugsweise quetschdeformierten, Crimphülse bereitgestellt sein.

Besonders bevorzugt ist es, dass eine kreisförmige oder längsförmige Anordnung des Flachschlauchabdichtkissens vorgesehen ist, wobei der Thermoplast-Einfüllschlauch für eine Summenleckrate von ≤ 8,561643835616438·10⁻⁸ Pa·m³·s⁻¹ im Heißsiegelschweißverfahren mit dem Flachschlauchabdichtkissen verbunden ist, wobei die Dichtigkeit des Thermoplast-Einfüllschlauchs durch Verklemmen mittels Crimphülse in Kombination mit einer Crimpzange bis 300000 Pa überdruckdicht erzielbar ist.

Eine weitere vorteilhafte Ausgestaltung der Erfindung besteht darin, dass sie außenliegend in Längsrichtung zusätzlich ein elastisches, unter Betriebsbedingungen bei Montagen bei fließendem oder stehendem Wasser mit der Umgebung nicht dauerhaft selbstklebendes Zellkautschuk-Dichtband, vorzugsweise mit Quellvlies, mit einem Flächengewicht von 400 g/m² bis 1.300 g/m² aufweist.

Das modifizierte Zellkautschuk-Dichtband, welches mit Quellvlies modifiziert sein kann, weist sehr geringe Schrumpfungseigenschaften auf, ist nicht dauerhaft selbstklebend und/oder ist für Montagen bei fließendem oder stehendem Wasser mit einem Flächengewicht von vorzugsweise 400 g/m² bis 1.300 g/m² ausgebildet. Besonders bevorzugt liegt die Weiterentwicklung darin, dass die Zellkautschuk-Abdichtsterne zum Einschieben zwischen Kabeln und/oder Rohren insbesondere aus zwei übereinander gelegten Zellkautschuk-Abdichtbändern, vorzugsweise mittig mit einer etwa 10 mm breiten Quellvlies-Dichtbandstreifen-Umwicklung und einer Längsnaht, hergestellt sind. Diese Lösung bietet Dichtheit gegen Wasserfortleitung bis 5 m Wassersäule bei einer Abdichtungsmontage bei fließendem oder stehendem Wasser und unmittelbar nach Montage und die leichten Demontage und Wiederverwendbarkeit, ohne die Gefahr einer Beschädigung von Kabeln oder Rohren. Besonders bevorzugt ist es, dass das Flachschlauchabdichtkissen im Anwendungsbereich als Einzelelement voll- oder halbkreisförmig im Hohlraum-, Kabelschutzrohr- oder Wanddurchführungsumfang oder in Dehn- und/oder Bewegungsfugen und Auflagerbänken angeordnet ist, wobei sich das Reifenventil oder der Thermoplast-Einfüllschlauch mit zwei Crimphülsen mindestens an einem Ende des Flachschlauchabdichtkissens befindet.

Eine bevorzugte Weiterbildung der Erfindung besteht darin, dass beim Abdichten von mit Kabeln und/oder Rohren durchzogenen Hohlräumen, Kabelschutzrohren oder Wanddurchführungen im Bereich der Berührungsstellen von Kabeln und/oder Rohren eine Umwicklung aus einem Zellkautschuk-Dichtband mit bzw. ohne Klebefolie eingesetzt ist und sich im Innenraum Füllelemente oder Zellkautschuk-Abdichtsterne befinden, die aus Dichtbandmaterial hergestellt sind. Das Flachschlauchabdichtkissen kann im Anwendungsbereich als Einzelelement in Auflagerbänken deckungsgleich übereinander oder in Dehn- und Bewegungsfugen abschnittsweise über-/aneinander gelagert bis Abdichtlängen von über 100 m angeordnet sein, wobei sich das Reifenventil oder der Thermoplast-Einfüllschlauch mindestens an einem Ende des Flachschlauchabdichtkissens befindet.

Eine zweckmäßige Weiterentwicklung der vorliegenden Erfindung besteht darin, dass die Zellkautschuk-Abdichtsterne zum Einschieben zwischen Kabeln und/oder Rohren aus zwei übereinander gelegten Zellkautschuk-Abdichtbändern, umgelegten Quellvlies-Abdichtbändern mit einer ≥ 5 mm breiten Längsnaht hergestellt sind.

Beim Abdichten von mit Dehn- und Bewegungsfugen oder Auflagerbänken durchzogenen Hohlräumen im Bereich der Berührungsstellen kann eine zumindest 100%ige Umwicklungsbedeckung derselben in Kombination mit aus einem modifizierten Quellvlies-Zellkautschuk-Dichtband mit einer Dicke ≥ 6 mm mit Klebefolie hergestellt sein.

Eine besonders bevorzugte Weiterbildung der Erfindung besteht darin, dass das Flachschlauchabdichtkissen über ein Reifenventil oder über den Thermoplast-Einfüllschlauch mit einem gasförmigen Medium (Luft) gefüllt ist und der bis 300000 Pa überdruckdichte Einfüllschlauch durch Verpressen mittels Crimphülse in Kombination mit einer Crimpzange hergestellt ist.

Das Flachschlauchabdichtkissen kann weiterhin mit einem gefalteten Band oder Flachschlauch gebildet sein, das je nach dem Anwendungsbereich Thermoplast, Elastomere und/oder schwer entflammbare Thermoplast-Elastomer-Gemische aufweist, wobei diese Stoffe metallische und/oder metallfreie Einlagen aufweisen.

Eine weitere vorteilhafte Ausgestaltung der Erfindung besteht darin, dass das Flachschlauchabdichtkissen, insbesondere das Band, mit metallischer Einlage vorzugsweise mindestens aus einer fünflagigen Thermoplast-Verbundfolie mit den Lagen
- 100 bis 250 µm PE
- 10 bis 23 µm PET
- 9 bis 5 µm ALU
- 10 bis 23 µm PET
- 100 bis 250 µm PE
hergestellt ist.

Diese Lösung weist eine vergleichsweise lange Brauchbarkeitsdauer, bei einem Thermoplast-Einfüllschlauch von ca. 5 bis 7 Jahren und beim Reifenventil von mehr als 20 Jahren, und eine hohe Beständigkeit gegen Chemikaliengemische und Umwelteinflüsse auf. Vorzugsweise kann das Flachschlauchabdichtkissen mit metallischer Einlage eine Summenleckrate von 8,561643835616438·10⁻⁸ Pa·m³·s⁻¹ und das dreilagig aufgebaute, metallfreie Abdichtkissen eine solche von ≤ 6,341958396752917·10⁻⁶ Pa·m³·s⁻¹ aufweisen.

Eine weitere vorteilhafte Ausgestaltung der Erfindung besteht darin, dass das Flachschlauchabdichtkissen aus einer dreilagigen Thermoplast-Verbundfolie ohne metallische Einlage mit dem Aufbau
- 100 bis 250 µm PE
- 9 bis 23 µm PET oder gleichwertige PBT, PPE, PP, PE, insbesondere Tyvek < 64,4g/m² etc.
- 100 bis 250 µm PE
hergestellt ist.

Eine weitere vorteilhafte Ausgestaltung der Erfindung besteht darin, dass für das Zellkautschuk-Dichtband und den Zellkautschuk-Abdichtstern aus Werkstoffen sogenannter Natur- und/oder Synthesekautschuk Elastomeren mit einer dem Anwendungsbereich vorgesehenen Schichtdicke von 2 bis > 10 mm mit/ohne einem zugfesten Quellvlies-, Textil-, Kunststoff- oder Glasfasergewebe im Zentrum oder an den Rändern, einseitig ohne/mit doppelseitig klebendem Dichtband versehen, hergestellt werden. Das Zellkautschuk-Dichtband weist sehr gute Freibewitterungs-, Ozon-, Druckverformbeständigkeit und Rückprallelastizität mit einem äußerst geringen Gewicht mit/ohne dauerhaft selbstklebenden Eigenschaften mit einem Flächengewicht von etwa 400 g/m² bei einer Banddicke von 3 mm für Kabel-/Rohrabdichtung auf.

Eine weitere vorteilhafte Ausgestaltung der Erfindung besteht darin, dass das Zellkautschuk-Dichtband, vorzugsweise in Kombination mit Quellvlies, also entsprechend modifiziert, für die Anwendungen als wiederverwendbare Schutzvorrichtung gegen Wasserfortleitung in Brücken, Tunneln und Gebäudeeinführungen modifiziert mit Glasfaser-, Textil- oder PP-Gewebeband mit zusätzlich zugfesten und temperaturstabilen Eigenschaften in Banddicken ≥ 6 mm und 10 mm, sowie dass das zugfeste Gewebe in einer neutralen Lage in der Mitte ausgestaltet, hergestellt sein kann. Diese Lösung weist eine vergleichsweise sehr hohe Wirtschaftlichkeit und Umweltfreundlichkeit auf, so dass feuchtigkeitsdichte Abdichtkissen-Lager-Einzelverpackungen aus PE-Folie entfallen und dass Montagen sofort bei fließendem oder stehendem Wasser ausgeführt werden können. Diese Lösung reduziert die Material-Beschaffungskosten, den Aufwand und die Gefahr von Beschädigungen in Anwendungen, bei denen die Abdichtung auf Grund von öffentlichen Ausschreibungen bei Nachbelegungen oft durch unterschiedliche Unternehmen gewechselt werden muss.

Besonders bevorzugt ist es vorgesehen, dass das Flachschlauchabdicht-kissen mit metallischer Einlage eine Summenleckrate von ≤ 8,561643835616438·10⁻⁸ Pa·m³·s⁻¹ und das dreilagig aufgebaute, metallfreie Abdichtkissen eine solche von ≤ 6,341958396752917·10⁻⁶ aufweist. Vorzugsweise besteht die Vorrichtung aus einem in der Länge und Breite festgelegten Flachschlauchabdichtkissen (1), welches als Zwischenraumabdichtung an seinen Außenseiten mit einem quellvliesmodifiziertem Zellkautschuk-Dichtband (5 oder 6a) ausgerüstet ist, das an einer Breitseite mit einem Reifenventil (3) oder Thermoplast-Einfüllschlauch (2a) verschweißt ist, das mit einem gasförmigem Medium befüllt (4) und überdruckdicht mit einer Crimphülse (2b) in Kombination mit einer Crimpzange mit einer Leckrate von ≤ 8,561643835616438·10⁻⁸ Pa·m³·s⁻¹ verschlossen ist.

Grundsätzlich kann das Flachschlauchabdichtkissen zusätzlich oder alternativ zu dem Zellkautschukabdichtband ein Brandschutz-Hitzeschutz-Band (BHB) aufweisen. Dieses kann an der Vorrichtung in einem Kontaktbereich mit einer Fuge angeordnet sein. Das Flächengewicht des BHB kann vorzugsweise 1,1 bis 1,9 kg/m² betragen. Die Materialdicke kann beispielsweise 1 - 2 mm sein.

Das Flachschlauchkissen, welches auch als Flachschlauchabdichtkissen bezeichnet werden kann, kann für das BHB (Brandschutz-Hitzeschutz-Band) ein Befestigungsmittel sein, welche eine Fugenbewegung, also beispielsweise eine Stauchung oder Weitung der Fuge ausgleichen kann. Hierfür kann vorzugsweise eine Einrichtung bereitgestellt sein, mittels welcher zumindest ein Anteil an Gas aus dem Flachschlauchkissen abführbar oder diesem zuführbar ist. Dadurch ist ein Reibungsschluss zwischen BHB und Fugenwand zuverlässig gewährleistet und das BHB verbleibt auch bei Scheerbewegungen der Fuge in dieser ortsfest vorgesehen.

Das BHB kann vorzugsweise schon bereits allein durch den Anpressdruck des Kissens auf eine Fugeninnenseite/-innenwand in seiner Position an dem Fugenkissen festgelegt sein. Es kann insbesondere eine Reibschlussverbindung vorgesehen sen. Zum Ab- oder Zuführen kann beispielsweise ein Gebläse, ein Ventilator oder eine Pumpe vorgesehen sein, welche mit dem Inneren von mindestens einem Flachschlauchkissen in fluidischer Verbindung steht.

Grundsätzlich kann anstelle des Flachschlauchkissens nach der vorliegenden Erfindung auch ein anderer Körper als Haftmittel für das BHB in der Fuge vorgesehen sein, wobei der andere Körper Relativbewegungen der Fugenwände zueinander ausgleichen sollte um einen Anpressdruck des BHB auf eine Fugenwand aufrecht erhalten zu können. Demnach kann als Hitzeschutzvorrichtung das BHB erfindungsgemäß auch mit mindesten einem Körper bereitgestellt sein, welcher ausgebildet ist, das BHB in einer Fuge durch einen Pressdruck zwischen Körper und Fugenwand festzulegen. Dies könnte beispielsweise ein besonders formelastischer Polymerkörper oder ein mit einem Gas befülltes Kissen sein, welches vorzugsweise elastomere Eigenschaften aufweist. Auch kommt ein mit einem Gas befülltes Kissen in Betracht, dessen Befüllung bedarfsgerecht an die Fugenbewegung angepasst werden kann. Quellflies und Zellkautschuk sind hierbei nicht zwingend erforderlich.

Das Flachschlauchkissen weist bevorzugt einen Überdruck von 0,2 Bar auf. Der Überdruck ist jedoch bedarfsgerecht anpassbar und kann auch beispielsweise 0,5 Bar betragen.

Das Quellvlies kann insbesondere als Haftunterstützung bereitgestellt sein, sodass das BHB mit Haftmittel, insbesondere mit Flachschlauchabdichtkissen, vorzugsweise bei der Montage, nicht aus der Fuge heraus rutscht. Grundsätzlich kann statt dem Quellvlies und/oder dem Zellkautschuk auch ein anderes Mittel zur Haftunterstützung an dem Haftmittel, insbesondere dem Flachschlauchkissen, vorgesehen sein. Diese kann insbesondere in dem Bereich angeordnet sein, in welchem zwischen Haftmittel und Fugenwand kein BHB angeordnet ist. Diese Variante ist insbesondere beim Hitzeschutz von Interesse.

Vorzugsweise ist eine Haftunterstützung, insbesondere das Quellvlies, besonders gering im Gewicht, was einem Herausfallen der erfindungsgemäßen Vorrichtung bei der Montage vorbeugt. Das Quellvlies kann vorzugsweise adhäsiv-frei oder adhäsivarm sein. Das Quellvlies kann duktil sein und ist in Form und Dicke an das Untergrundmaterial, insbesondere die kontaktierenden Seitenwände der Fuge anpassen

Vorzugsweise ist es vorgesehen, dass das Brandschutz-Hitzeschutz-Band an der Vorrichtung in zumindest einem Kontaktbereich mit den Wandteilen der Fuge, insbesondere seitlich an dem Flachschlauchkissen, angeordnet ist.

Vorzugsweise werden nicht mehr als 50 % des Kontaktbereichs der Vorrichtung mit der Fuge von dem Brandschutz-Hitzeschutz-Band bedeckt.

Besonders zweckmäßig ist es nach einer Weiterbildung der Erfindung, dass nicht mehr als 50% des Kontaktbereichs der Vorrichtung mit den Wandteilen der Fuge von dem Brandschutz-Hitzeschutz-Band bedeckt sind, vorzugsweise das Brandschutz-Hitzeschutz-Band die halbe Höhe des Flachschlauchkissens entlang einer Längsrichtung desselbigen nicht übersteigt.

Besonders bevorzugt ist es, dass das Brandschutz-Hitzeschutz-Band an mindestens einer Außenseite ein selbstklebendes Haftmittel aufweist.

Vorteilhafterweise ist das BHB mit mindestens einer metallenen Einlage gebildet, wodurch diese schrumpf- und bruchfest sein kann, vorzugsweise bis ca. 450° C.

Zweckmäßigerweise kann es vorgesehen sein, dass das Brandschutz-Hitzeschutz-Band einen niedrigen Expansionsbeginn, vorzugsweise von ca. 145° C, aufweist, bei Hitzeeinwirkung schnell aufblähend und mit einem großen Blähvolumen bereitgestellt ist. Das Blähvolumen kann das 10- bis 150-fache und mehr, auch 10.000 des BHB im nicht expandierten Zustand sein, vorzugsweise das 11- bis 30-fache, besonders bevorzugt das 12- bis 18,5-fache. All diese Varianten können als große Blähvolumen bezeichnet werden. Das angegebene Blähvolumen kann insbesondere bei fehlender Auflast bereitgestellt sein. Die Bestimmung des Blähvolumens, welches auch als Schaumfaktor bezeichnet werden kann, erfolgt vorzugsweise bei einer definierten Temperatur von beispielsweise 450° C. Der Blähdruck des BHB kann vorzugsweise zwischen 1 und 5, besonders bevorzugt zwischen 1,2 und 2,5 liegen.

3 Bevorzugte Varianten sind in der nachfolgenden Tabelle aufgeführt.

| **Technische Daten** | | | | |
|---|---|---|---|---|
| Materialdicke | mm | 1,0 | 1,5 | 2,0 |
| Flächengewicht | kg/m² | 1,1 | 1,5 | 1,9 |
| Exansionsbeginn | °C | 145 | 145 | 145 |
| Schaumfaktor 30 min 450°C mit Auflast | | 13 bis 18,5-fach | | |
| Blähdruck bei 300°C | N/mm² | 1,2 - 2,0 | 1,5 - 2,3 | 1,75 - 2,5 |
| Blähverhalten (ohne Auflast) | | siehe Tabelle | | |
| Brandverhalten nach DIN 4102 Teil 1 | | Baustoffklasse B 2 | | |

Das Blähverhalten, insbesondere der voranstehenden Varianten, kann mit folgender Grafik beschrieben sein:

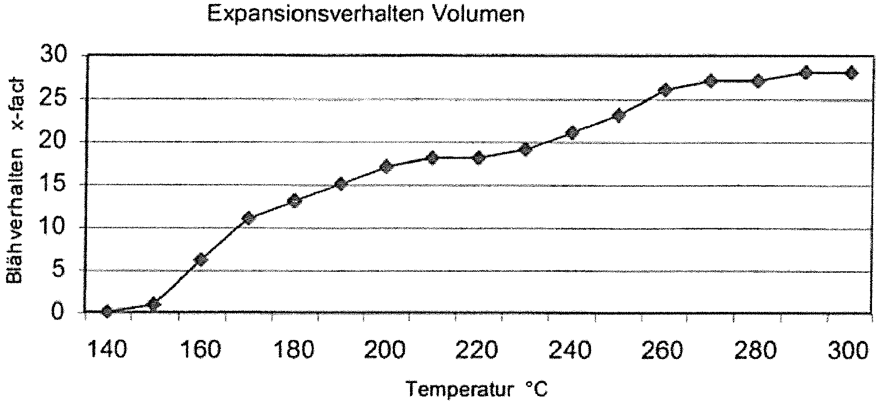

Zweckmäßigerweise ist es vorgesehen, dass das Brandschutz-Hitzeschutz-Band bei Hitzekontakt einen wärmedämmenden Schaum ausbildet, welcher in die Fuge eindringt. Der Schaum kann ab einer definierten Temperatur aus dem BHB entstehen (Expansionsbeginn), welche bedarfsgerecht anpassbar ist. Bevorzugt ist ein Expansionsbeginn bei 100° C - 200° C, besonders bevorzugt bei 145° C, vorgesehen.

Besonders bevorzugt ist es nach einer Weiterbildung der Erfindung, dass das Brandschutz-Hitzeschutz-Band bei Hitzekontakt in der Fuge einen an die Fugenform angepassten 3-dimensionalen Ausdehnungskörper in der Fuge bildet wobei das BHB, vorzugsweise in Richtung einer Hitzequelle, an Volumen zunimmt, um eine Hitze-Isolation zu bilden.

Zweckmäßigerweise kann es vorgesehen sein, dass das Brandschutz-Hitzeschutz-Band ein Brandverhalten nach DIN 4102 B2 (Stand 2018) zeigt.

Nach einer zweckmäßigen Weiterbildung kann es vorgesehen sein, dass das Brandschutz-Hitzeschutz-Band zumindest den Teil der Vorrichtung überdeckt, welcher im eingebauten Zustand mindestens einer Fugenöffnung zugewandt ist.

Vorteilhafterweise ist es vorgesehen, dass die Vorrichtung mindestens zwei Flachschlauchabdichtkissen aufweist, welche sandwichartig, beispielsweise, vorzugsweise zwischen zwei gegenüberliegenden Wandteilen der Fuge, angeordnet sind, wobei das Brandschutz-Hitzeschutz-Band die mindestens zwei Flachschlauchabdichtkissen mindestens gegenüber einer Fugenöffnung überspannt.

Die jeweils äußeren Flachschlauchkissen können bei einer solchen Anordnung mit dem BHB verbunden sein und sich schlaufenartig und oder bogenförmig über mögliche weitere Flachschlauchkissen, die zwischen den äußeren Flachschlauchkissen angeordnet sein können, vorzugsweise kontaktfrei erstrecken. So kann auch bei der Installation einer Sandwichstruktur eine Hitzeschutzkammer zwischen den Flachschlauchkissen und dem BHB bereitgestellt sein.

Besonders bevorzugt ist es nach einer Weiterbildung der Erfindung, dass das Brandschutz-Hitzeschutz-Band zumindest in einem Bereich mit einem Abstand zu dem Flachschlauchabdichtkissen angeordnet ist, vorzugsweise an zwei gegenüberliegenden Seiten des Flachschlauchabdichtkissens mit diesem verbunden ist und in einem Bereich zwischen den gegenüberliegenden Seiten schlaufenartig von dem mindestens einen Flachschlauchabdichtkissen beabstandet ist.

So kann bereichsweise, vorzugsweise in einem der Fugenöffnung zugewandten Bereich zwischen BHB und Flachschlauchkissen, eine Hitzeschutzkammer gebildet sein, welche sowohl als Expansionsraum für das BHB als auch als Schutzraum für das Flachschlauchkissen gegen Hitzeeinwirkung dienen kann und/oder eine Druckverbindungsleitung zu mindestens einem Flachschlauchkissen aufnehmen kann. Vorzugsweise ist eine solche Druckverbindungsleitung zum Befüllen und Entleeren der einzelnen Flachschlauchkissen vorgesehen und besonders bevorzugt feuerfest ausgebildet.

Vorzugsweise ist es vorgesehen, dass in einem Bereich auf dem Flachschlauchabdichtkissen, in welchem kein Brandschutz-Hitzeschutz-Band vorgesehen ist und das einem Wandteil zuwendbar ist, ein Montagehilfsmittel, insbesondere ein Quellvlieselement und/oder ein Zellkautschukelement, vorgesehen ist. Das Montagehilfsmittel und das BHB können im Kontaktbereich mit der Kontaktwand eine Kontaktfläche mit der Fugenwand bereitstellen. Flachschlauchkissen und BHB können insbesondere lose miteinander in Wirkverbindung stehen. Bei der Montage oder Installation der erfindungsgemäßen Vorrichtung kann somit zuerst das Flachschlauchkissen mit Montagehilfsmittel in die Fuge eingeführt werden und anschließend das BHB in die Fuge bis zum Montagehilfsmittel eingeschoben werden. Das Montagehilfsmittel kann somit bei der Installation als gegenüber dem übrigen Flachschlauchkissen mit Quellvlies oder Zellkautschuk als hervorstehender Anschlag dienen, wodurch eine ortsgenaue Positionierung des BHB an dem Flachschlauchkissen ermöglicht ist. Das Montagehilfsmittel kann mit dem BHB im Kontaktbereich mit einer Fugenwand eine gemeinsame Kontaktfläche bilden. Zwar kann das Montagehilfsmittel auch Quellvlies oder Zellkautschuk aufweisen, ist in seiner Funktion jedoch von dem Montagehilfsmittel hinsichtlich der Positionierungsfunktion desselbigen zu unterscheiden.

Besonders bevorzugt ist es vorgesehen, dass zumindest in einem Bereich auf dem Flachschlauchabdichtkissen, in welchem das Brandschutz-Hitzeschutz-Band auf dem Flachschlauchabdichtkissen vorgesehen ist, zwischen Flachschlauchabdichtkissen und Brandschutz-Hitzeschutz-Band Quellvlies angeordnet ist. Grundsätzlich kann Quellvlies flächig auf dem Flachschlauchkissen vorgesehen sein. Insbesondere zwischen BHB und Flachschlauchkissen kann Quellvlies und/oder Zell-Kautschuk eine besonders dichte Fugenfüllung bereitstellen. Vorteilhafterweise kann es vorgesehen sein, dass zwischen den einzelnen Flachschlauchkissen der Vorrichtung Quellvlies angeordnet ist.

Vorzugsweise ist es vorgesehen, dass die einzelnen Flachschlauchkissen im verbauten Zustand der Vorrichtung in einem Kontaktbereich mit einer Fugenwand Quellvlies aufweisen.

Die Erfindung wird nun anhand von Ausführungsbeispielen näher erläutert. Es zeigen:
- Fig. 1: eine perspektivische Ansicht einer temporären unbeschichteten Mehrweg-Abdichtung für Kabel-/Schutzrohre oder für Dehn- und Bewegungsfugen oder Auflagerbänke gegen Wasserfortleitung,
- Fig. 2a: eine perspektivische Ansicht einer der in Fig. 1 gezeigten Abdichtung mit einer 3 mm dicken und zwischen 20 bis 60 mm breiten Quellvlies-, Zellkautschuk-Beschichtung,
- Fig. 2b: eine perspektivische Ansicht einer bis 60 cm breiten temporären Mehrweg-Abdichtung mit einer vollflächig modifizierten Quellvlies-Zellkautschuk-Abdichtung der Fig. 1 für Fugenbreiten von mehr als 16 cm in Dehn- und Bewegungsfugen oder Auflagerbänken,
- Fig. 2c: eine perspektivische Ansicht der Fig. 1 und 2b für Auflagerbänke mit zwei Abdichtkissen, vollflächig umhüllt mit modifiziertem Quellvlies-Zellkautschuk in einer Schichtdicke ≥ 6 mm, mit mindestens einem ausgestanzten Zellkautschukloch zum Einziehen des Abdichtkissens in Auflagerbänke ausgestattet,
- Fig. 2d: eine perspektivische Ansicht der Fig. 1 und 2b mit modifiziertem ≥ 6 mm Quellvlies-Zellkautschuk-Dichtband für Längs- und Querfugen in Brücken und Tunneln, an den Enden mindestens 30 cm deckungsgleich aneinandergereiht für Abdichtlängen bis über 100 m,
- Fig. 2e: eine perspektivische Ansicht der Fig. 1 und 2b, mindestens ein Ende um 180° umgebogen, mit modifizierter Quellvlies-Zellkautschuk-Beschichtung für Eckbereiche in Brücken, Tunneln und Gebäuden,
- Fig. 3: eine Querschnittsansicht des in Fig. 1 gezeigten Thermoplast-Einfüllschlauchs, der mittels Crimphülse in Kombination mit Crimpzange bis 300000 Pa überdruckdicht verschlossen ist,
- Fig. 4: einen Querschnitt einer der Fig. 2a ähnlichen Mehrweg-Abdichtung,
- Fig. 5: eine perspektivische Ansicht der in Fig. 4 gezeigten Kabelschutzrohr- und/oder Rohr-Zwischenraumabdichtung aus einem mit Quellvlies-Dichtband umhüllten Zellkautschuk-Dichtstern,
- Fig. 6a: eine Querschnittsansicht der in den Fig. 2a, 4 und 5 gezeigten Zellkautschuk-Abdichtung,
- Fig. 6b: eine Querschnittsansicht des in Fig. 6a modifizierten zugfesten Zellkautschuk-Dichtbandes mit eingebettetem Quellvlies-, Glasfaser- oder Textilgewebe,
- Fig. 7: eine Querschnittsansicht durch eine erfindungsgemäße Vorrichtung mit Flachschlauchabdichtkissen, vorzugsweise nach einem der Fig. 2a bis 2e, welches in einer Fuge abdichtend angeordnet ist und an seiner Außenseite ein Brandschutz-Hitzeschutz-Band aufweist, welches das Flachschlauchabdichtkissen gegenüber einer Fugenöffnung überspannt,
- Fig. 8: eine Querschnittsansicht durch eine erfindungsgemäße Vorrichtung mit zwei Flachschlauchabdichtkissen vorzugsweise nach Fig. 2e, welche in einer Fuge abdichtend angeordnet sind und an ihren Außenflächen ein Brandschutz-Hitzeschutz-Band aufweisen, welches die Flachschlauchabdichtkissen gegenüber einer Fugenöffnung überspannt,
- Fig. 9: Seitenansicht auf eine Anordnung von mehreren Vorrichtungen nach Fig. 7 oder 8 in einer, vorzugsweise bogenartigen, Fuge.

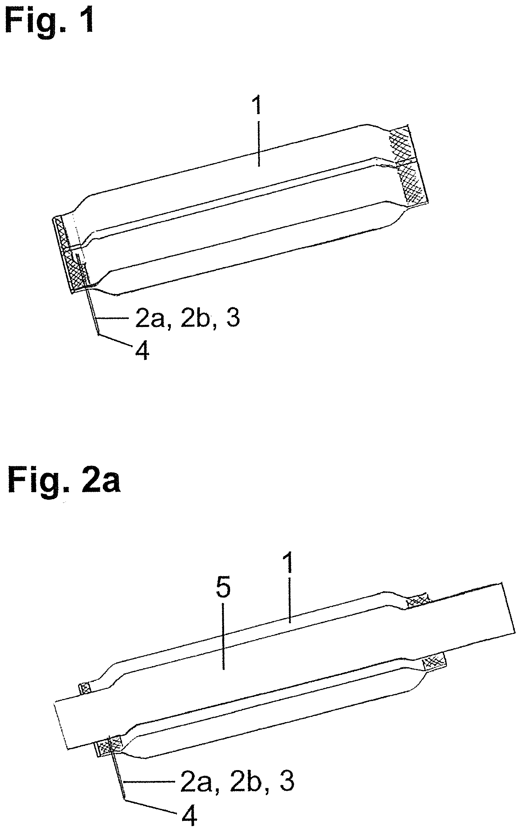

Die Fig. 1 zeigt die temporäre Mehrweg-Abdichtung mit dem Flachschlauchabdichtkissen 1, z. B. in Breiten von 0,1 m bis 0,6 m und Längen von 0,15 m bis 27 m, vorzugsweise gefüllt mit Luft, mit oder ohne Metalleinlage, aus einer, insbesondere im Bahngasschweißen und Heißsiegelschweißverfahren hergestellten, druckbeständigen, mindestens dreilagigen Thermoplast-Verbundfolie oder fünf-lagigen Aluminium-Verbundfolie, welche mit einem eingeschweißten Thermoplast-Einfüllschlauch 2a oder Reifenventil 3 zum Befüllen des Abdichtkissens verbunden ist, der sich an der Längsseite und an einer der Breitseiten des Flachschlauchkissens befindet.

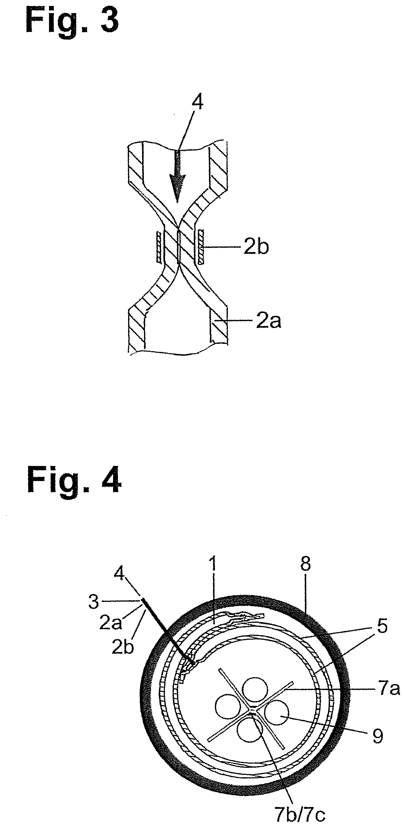

Die Fig. 2a zeigt eine perspektivische Ansicht der Fig. 1 mit einem beidseitig außen mittig teilflächig mit Quellvlies modifiziertem Zellkautschuk-Dichtband 5 in den Abmessungen Dicke 3 mm, Breite mindestens 20 mm und Länge mindestens 100 mm länger als das Abdichtkissen der Fig. 1 beschichteten Flachschlauchabdichtkissen 1, das mit einem vorzugsweise im Heißsiegelschweißverfahren verschweißten Thermoplast-Einfüllschlauch 2a oder mit einem Reifenventil 3 versehen ist, der/das sich an einer der 15 cm bis 100 cm langen Längsseiten oder an den 10 bis 60 cm großen Stirn- bzw. Breitseiten des Flachschlauchabdichtkissens 1 befindet und bei kreisförmiger Anwendung zur optimalen Druckverteilung dienen kann. Die Ausbildung als Flachschlauchabdichtkissen 1 wird vorzugsweise durch Herstellung von druckdichten Verschlüssen in Längsrichtung und an den beiden Enden der Verbundfolien-Oberflächen erzielt. Nach Druckfüllung mit Luft 4 über ein Reifenventil 3 oder den Thermoplast-Einfüllschlauch 2a kann die Druckdichtigkeit des Thermoplast-Einfüllschlauches 2a, wie in der Fig. 3 gezeigt, durch Verpressen des Thermoplast-Einfüllschlauches 2a mit einer in Fig. 3 angedeuteten Crimphülse 2b mittels einer Crimpzange erzielt werden.

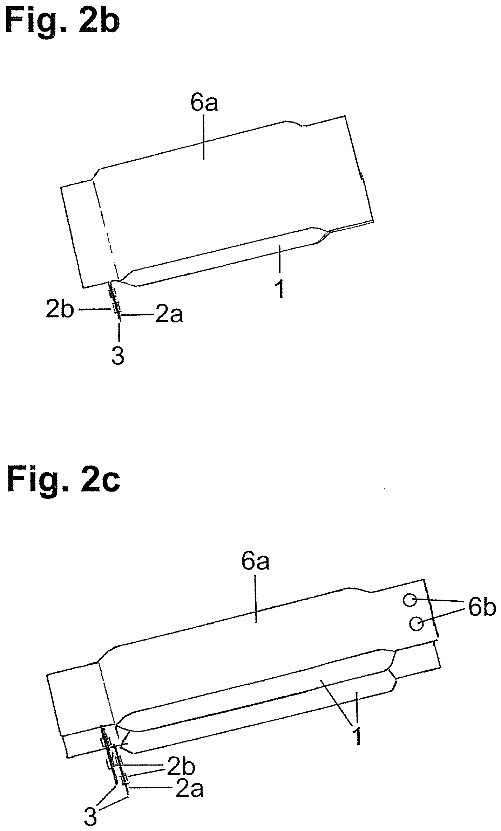

Die Fig. 2b zeigt eine Querschnittsansicht der Fig. 1, bestehend aus einem mit einem beidseitig außen vollflächig mit modifiziertem zugfestem Quellvlies-, Zellkautschuk-Dichtband 6a beschichteten bis 60 cm breiten Flachschlauch-abdichtkissen 1 für Fugenbreiten bis etwa 25 cm und Fugenlängen bis über 100 m, das mit einem Reifenventil 3 oder mit einem im Heißsiegelschweißverfahren verschweißten Thermoplast-Einfüllschlauch 2a versehen ist, das/der sich an einer der 1 m bis 30 m langen Längsseiten oder an den 10 bis 60 cm großen Stirn- bzw. Breitseiten des Flachschlauchabdichtkissens 1 befindet und bei längsförmiger Anwendung zur optimalen Druckverteilung dient. Die Ausbildung als Flachschlauchabdichtkissen 1 wird durch Herstellung von druckdichten Verschlüssen in Längsrichtung und an den beiden Enden der Verbundfolien-Oberflächen erzielt. Nach Druckfüllung mit Luft 4 über ein Reifenventil 3 oder den Thermoplast-Einfüllschlauch 2a wird die Druckdichtigkeit des Thermoplast-Einfüllschlauches 2a, wie in der Fig. 3 gezeigt, durch Verpressen des Thermoplast-Einfüllschlauches 2a mit einer Crimphülse 2b mittels einer Crimpzange erzielt.

Die Fig. 2c kann je nach Anwendungsbereich ein oder zwei Flachschlauchabdichtkissen 1 der Fig. 1 oder 2b mit mindestens einem ausgestanzten Zellkautschuk-Dichtbandloch deckungsgleich übereinander verklebt in Rückseiten von Auflagerbänken bis über 20 m eingezogen werden.

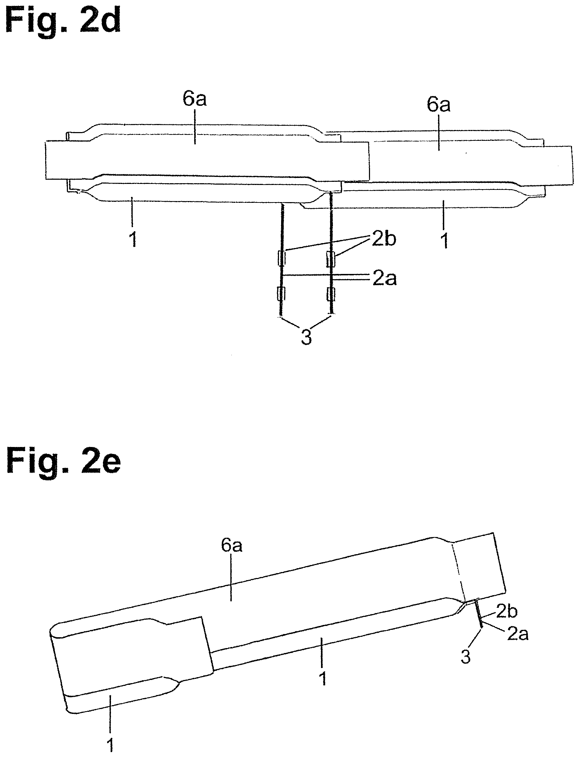

Die Mehrwegabdichtung nach Fig. 2d, kann je nach Anwendungsbereich mit mehreren Flachschlauchabdichtkissenenden der Fig. 1, 2b oder 2c gebildet sein und mindestens 30 cm bis > 100 cm deckungsgleich übereinandergelegt sein, um Ecken oder Bögen oder in senkrechter oder waagrechter Form in Dehn- und/oder Bewegungsfugen eingeschoben, ein Wassergefälle eingestellt und bis über 100 m gegen Wasserfortleitung abgedichtet werden.

Die Fig. 2e kann je nach Anwendungsbereich beim Flachschlauchabdicht-kissen der Fig. 2a und 2b für eine druckwasserdichte Abdichtung die Enden mit mindestens zweimal der Lieferbreite um 180° umgebogen, mit Luft befüllt und den/die Endbereich(e) mit dauerelastischer Dichtmasse ausgefüllt werden.

Die Fig. 4 zeigt einen Querschnitt einer der Fig. 2a ähnlichen temporären Mehrweg-Abdichtvorrichtung 1, die vorzugsweise zur kreisförmigen Verwendung, zur Kabel- und/oder Rohr-Zwischenraumabdichtung, Montage bei fließendem oder stehenden Wasser mit Wechselwirkung bei Wärme und Wasser, in mit mehreren Kabeln und/oder Rohren 9 belegten Kanälen 8, Rohren 9 und/oder Wanddurchführungen 8, vorgesehen ist. Die temporäre Mehrweg-Abdicht-vorrichtung 1 ist in Kombination quellvlies-zellkautschuk-beschichtet 5 und kann einen Zellkautschuk-Abdichtstern 7a mit einer Quellvlies-Dichtbandstreifen-Umhüllung 7b aufweisen, welcher vorzugsweise mindestens eine Längsnaht 7c aufweisen kann.

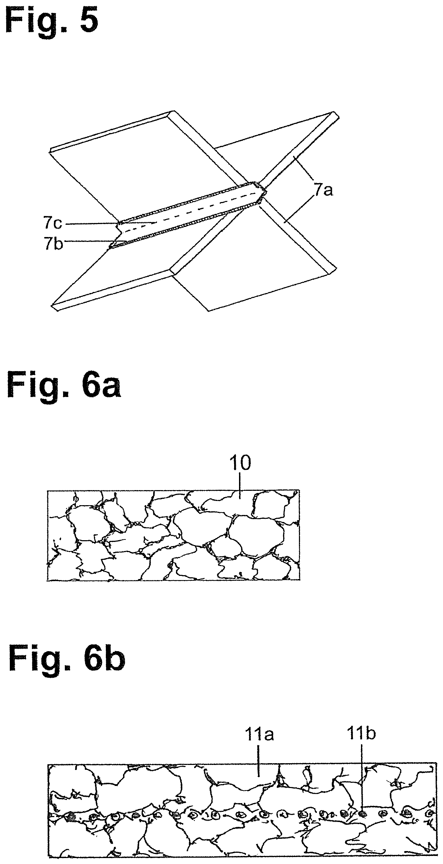

Die Fig. 5 zeigt eine perspektivische Ansicht der in Fig. 4 gezeigten Vier-kammer-Zellkautschuk-Abdichtstern-Zwischenraumabdichtung 7a, hergestellt aus mindestens zwei übereinander gelegten 3 mm Zellkautschuk-Dichtbändern 5, die mittig mit einem Quellvlies-Dichtband umwickelt und in Längsrichtung 7c vernäht sind.

Die Fig. 6a und 6b zeigen eine ähnliche Vorrichtung wie in Fig. 2a, 4 und 5 als Zellkautschuk-Dichtband 5, das in Banddicke 3 mm mit/ohne zugfeste Quellvlies-Gewebeeinlage oder in Banddicken ≥ 6 und 11 mm mit/ohne einer zugfesten und temperaturbeständigen Gewebeeinlage 11b in Längsrichtung der Dichtbandmitte und/oder an der Dichtband-Ober-/Unterseite ausgebildet ist. Bei den Zellkautschuk-Dichtbändern 5, 6a und 6b, die um das Flachschlauchabdichtkissen 1 gelegt sind, ist auf mindestens einer Seite doppelseitig selbstklebendes Band angebracht. Als Werkstoff für den Zellkautschuk werden im sogenannten Expansionsverfahren auf der Basis von Natur- und/oder Synthesekautschuk z.B. EPDM und anderen synthetischen Elastomeren hergestellt. Das 3 mm Quellvlies-Zellkautschuk-Dichtband 5 weist vorzugsweise ein Flächengewicht von 400 g/m² auf. Die Materialdicke des mit/ohne Quellvlies-Gewebeeinlage 11b modifizierten zugfesten Zellkautschuk-Dichtbandes 6a kann insbesondere bis zu 11 mm oder mehr sein mit einem Flächengewicht von 1.300 g/m² und kann dazu dienen, zwei übereinandergelegte Flachschlauchabdichtkissen 1 der Fig. 2c über ausgestanzte Zuglöcher 6b mit einer Zugkraft von ≤ 25 kg in Längen bis > 10 m in die hintere Auflagerbankkammer einzuziehen oder nach Fig. 2b und 2d in Längen von 23 m bis über 100 m in Dehn- und Bewegungsfugen einzuschieben.

Die abdichtende Funktion des modifizierten Quellvlies-Zellkautschuk-Dichtbandes 5 und 6a kommt sofort bei Druckfüllung des Flachschlauchabdichtkissens 1 ohne und/oder unter Wasser zum Tragen. Ein nachteiliges Verkleben oder Verschieben des Zellkautschuk-Abdichtsterns 7a oder des Flachschlauchabdichtkissens 1 tritt bei dem verwendeten Zellkautschuk nicht auf, weswegen eine schnelle und einfache Demontage und eine wiederholte Montage, insbesondere durch seine hohe Rückprallfestigkeit unmittelbar nach Demontage, ermöglicht ist.

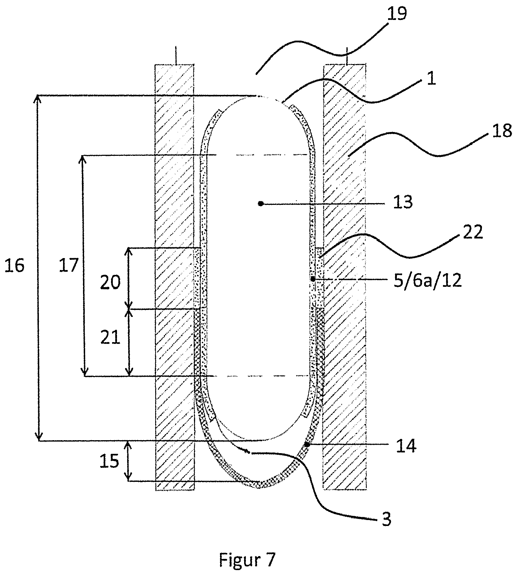

Fig. 7 zeigt eine Querschnittsansicht durch die Längsachse einer länglichen Ausführungsform der erfindungsgemäßen Vorrichtung, bei welcher das Fugenabdichtkissen 1, vorzugsweise mit Ventil, mit einem Brandschutz-Hitzeschutz-Band (BHB) 14 ausgebildet ist, welches das Flachschlauchabdichtkissen 1 hitzebeständig macht/von Hitze abschirmt.

Gemäß Fig. 7 ist die erfindungsgemäße Vorrichtung in einer Fuge 19 mit Wandteilen 18 vorgesehen, welche in etwa parallel zueinander angeordnet sind. Grundsätzlich kann ein Wandteil 18 auch ein Bereich einer in etwa ringförmigen Öffnung in einer Wand bilden, wobei die Fuge insbesondere als Durchtrittsöffnung in der Wand ausgebildet ist.

Die erfindungsgemäße Vorrichtung kann beispielsweise in Zwischenräumen und in Hohlräumen, Kabelschutzrohren oder Wanddurchführungen, die mit Kabeln und/oder Rohren belegt sind, oder in, vorzugsweise bogenförmigen, Dehnungsfugen und/oder Bewegungsfugen und Auflagerbänken vorgesehen werden.

Grundsätzlich kann das Flachschlauchabdichtkissen 1 zumindest in einem Bereich 17, welcher in etwa parallel zu den Fugenwandteilen 18 ausgerichtet ist, Quellvlies 12, Zellkautschuk-Abdichtband 5 und/oder modifiziertes Quellvlies-Zellkautschuk-Dichtband mit/ohne selbstklebendem/s zugfestem/s Gewebe 6a aufweisen. Mittels dieser Beschichtung kann insbesondere eine Flüssigkeitsdichtigkeit der Fuge 19 bei eingesetzter Vorrichtung erreicht werden.

Die Fuge 19 kann zumindest zu einem unteren Bereich hin geöffnet sein, in welchem das Brandschutz-Hitzeschutz-Band (BHB) 14 unterhalb des Flachschlauchabdichtkissens 1 angeordnet ist. Grundsätzlich ist es zweckdienlich, dass BHB 14 in Richtung der Fugenöffnung auszurichten, aus welcher ein Hitzeherd beziehungsweise eine Hitzeeinwirkung auf das Flachschlauchabdichtkissen 1 zu erwarten ist.

Dass BHB 14 ist zwischen Flachschlauchkissen 1 und dem Wandteil 18 angeordnet und kann mit dem Flachschlauchkissen 1 beziehungsweise der Beschichtung 5/6a/12 verbunden sein. Besonders bevorzugt kontaktiert das BHB die jeweiligen Wandteile 18, die sich gegenüberliegen können. Vorzugsweise ist der Kontaktbereich zwischen dem jeweiligen Wandteil 18 und dem BHB 14 auf höchstens 50% der Kontaktfläche zwischen der Vorrichtung und dem Wandteil 18 beschränkt. Die übrige Kontaktfläche kann von einem Montagehilfsmittel 22 bedeckt sein, welches mindestens eine der Beschichtungen beziehungsweise Dichtmittel 5/6a/12 aufweisen kann. Hierdurch kann in verlässlicher Weise eine Flüssigkeitsdichtigkeit bereitgestellt sein.
1. Das Montagehilfsmittel 21 kann hierbei 2 Funktionen übernehmen: Ist das BHB 14 lose mit dem Flachschlauchabdichtkissen 1 verbunden, also zwischen Wand und Flachschlauchkissen eingeklemmt, kann die Montage der erfindungsgemäßen Vorrichtung 2-stufig erfolgen. Zuerst kann das Flachschlauchkissen mit Beschichtung und Montagehilfsmittel 22 in der Fuge angeordnet werden. Hierbei werden Befüllung und Ausrichtung der erfindungsgemäßen Vorrichtung so vorgenommen, dass die Montagehilfsmittel 22 mit den entsprechenden Wandteilen 18 kontaktieren. Anschließend wird das BHB 14 zwischen Flachschlauchkissen 1 und Wandteil 18 bis zu dem Montagehilfsmittel 22 in die Fuge 19 eingeführt. Hierdurch kann das Montagehilfsmittel 22 als Anschlag dienen, wodurch das BHB 14 positionsgenau in der Fuge an der erfindungsgemäßen Vorrichtung vorsehbar ist.
2. Wenn das BHB 14 an der erfindungsgemäßen Vorrichtung vorgesehen ist, kann ein Spalt zwischen Wandteil und Flachschlauchabdichtkissen mit Beschichtung 5/6a/12 ausgebildet, durch welchen Flüssigkeiten an dem Flachschlauchkissen 1 vorbei zu dem BHB 14 von oben durchdringen können. Durch das Vorsehen des Montagehilfsmittels 22 ist zwischen Flachschlauchabdichtkissen 1 und Wandteil 18 ein Flüssigkeit abdichtendes Element bereitgestellt, welches der flüssigkeitsabriegelnden Wirkung der erfindungsgemäßen Vorrichtung zuträglich sein kann.

Um eine Wasserfortleitung an der erfindungsgemäßen Vorrichtung vorbei zuverlässig ausschließen zu können, kann es zweckmäßig sein, dass das Montagehilfsmittel 22 zumindest 50% der Kontaktfläche zwischen Flachschlauchkissen 1 und Wandteil 18 bedeckt. Der Kontaktbereich von BHB 14 und Montagehilfsmittel 22 ist mit den Bezugszeichen 20 und 21 in Fig. 7 dargestellt. Durch die Position des Montagehilfsmittels 22 gegenüber dem gesamten zum Wandteil 18 parallel ausgerichteten Bereich 17 des Flachschlauchabdichtkissens 1 ist der Anteil der Kontaktfläche des BHB 14 zwischen Flachschlauchabdichtkissen 1 und Wandteil 18 begrenzt und setzt sich anteilig aus den Kontaktflächen 20 und 21 zusammen.

Je weiter oben das Montagehilfsmittel 22 an dem Flachschlauchabdichtkissen 1 gemäß Fig. 7 angeordnet ist, desto größer wird insgesamt der Kontaktbereich, da mehr BHB 14 zwischen den parallelen Bereich des Flachschlauchabdichtkissens 1 und Wandteil 18 eingeschoben werden kann. Hierbei kann die Größe des Montagehilfsmittels 20 so anpassbar sein, dass der Flächenanteil von BHB 14 im Kontaktbereich zwischen Flachschlauchkissen 1 und Wandteil 18 vorzugsweise weniger als die Hälfte beträgt.

Das BHB 14 ist vorzugsweise mit einer Überlänge gegenüber dem Außenumfang des Flachschlauchabdichtkissens 1 bereitgestellt. Der Außenumfang des Flachschlauchabdichtkissen 1 zwischen den beiden Kontaktbereichen des BHB 14 mit dem Flachschlauchkissen 1 ist somit geringer als die Breite des angeordneten BHB 14.

Hierdurch ist ein Abstand 15 zwischen Flachschlauchkissen 1 und BHB 14 entlang einer Längsachse in etwa parallel zu einer Höhe des Flachschlauchkissens 1, welche in etwa parallel zu dem mindestens einen Wandteil 18 ist, bereitgestellt.

Durch den Abstand 15 zwischen Flachschlauchkissen 1 und BHB 14 ist eine Hitzeschutzkammer gebildet, welche zum einen das Flachschlauchkissen 1 gegenüber Hitzeeinwirkung schützt und zum anderen einen Expansionsraum bereitstellt, in welchen das BHB 14 bei Hitzekontakt in Richtung Flachschlauchkissen 1 expandieren kann. Das BHB 14 kann bei Hitzekontakt insbesondere aufschäumen und dadurch einen wärmedichtenden Abschluss zwischen den Wandteilen 18 der Fuge 19 bereitstellen. Selbst nach einem Schäumen kann die Entfernbarkeit des BHB 14 aus der Fuge 19 ermöglicht sein.

Grundsätzlich kann die Kontaktfläche zwischen Flachschlauchabdichtkissen 1 und dem Wandteil 18, welche sich insbesondere durch die Flächenanteile 20 und 21 zusammensetzen kann, über den gesamten in etwa parallel geführten Bereich des Flachschlauchkissens 1 zu dem Wandteil 18 ausgebildet sein.

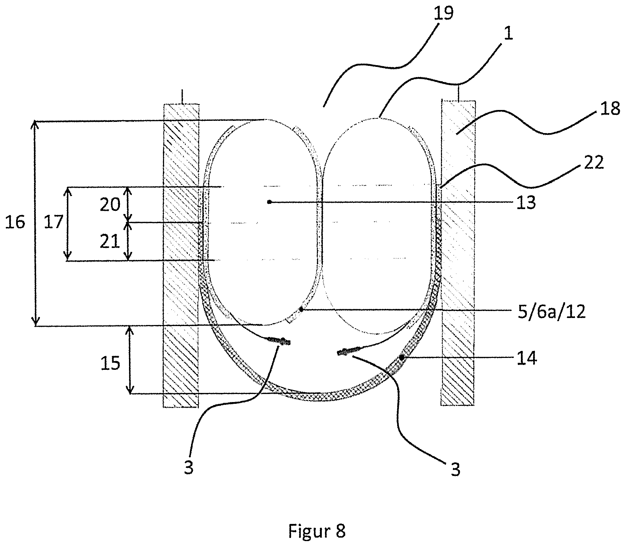

Fig. 8 zeigt eine Ausführungsform der erfindungsgemäßen Vorrichtung, bei welcher zwischen zwei Wandteilen 18 einer Fuge 19 sandwichartig zwei Flachschlauchabdichtkissen 1 angeordnet sind. Sowohl an ihren Außenseiten gegenüber den Wandteilen 18 als auch zwischen den einzelnen Flachschlauchabdichtkissen 1 können jeweils die Beschichtungen 5/6 a/12 auf der Oberfläche der Flachschlauchkissen 1 jeweils vorgesehen sein. Bei einer solchen sandwichartigen Anordnung kann das BHB 14 jeweils das Flachschlauchabdichtkissen 1 kontaktieren, welches mit einem der Wandteile 18 in Berührung steht, wobei das BHB 14 zwischen Flachschlauchabdichtkissen 1 und Wandteil 18 vorgesehen sein kann. Zwischen Flachschlauchkissen 1 und BHB 14 kann wiederum die Beschichtung 5/6 a/12 vorgesehen sein. Grundsätzlich können zwischen den beiden Flachschlauchkissen 1, welche mit den Wandteilen 18 rechts- und linksseitig kontaktieren, weitere Flachschlauchkissen angeordnet sein, zwischen welchen grundsätzlich weitere Beschichtungen 5/6a/12 vorgesehen sein können.

Bei der Anordnung gemäß Fig. 8 ist das BHB 14 wiederum mit einem Abstand 15 vorgesehen, durch welchen eine Hitzeschutzkammer zwischen den Flachschlauchabdichtkissen 1 und dem BHB 14 bereitgestellt ist.

Nach der Ausführungsform gemäß Fig. 8 kann der gesamte in etwa parallel geführte Bereich des Flachschlauchabdichtkissens 1 mit dem Wandteil 18 kontaktieren, wobei der Kontaktbereich 17 sich aus den einzelnen Bereichen 20 und 21 zusammensetzt, in welchen zum einen das Montagehilfsmittel 22 und zum anderen das BHB 14 mit der Wand 18 kontaktiert. Diese Eigenschaft ist von der Sandwichanordnung unabhängig.

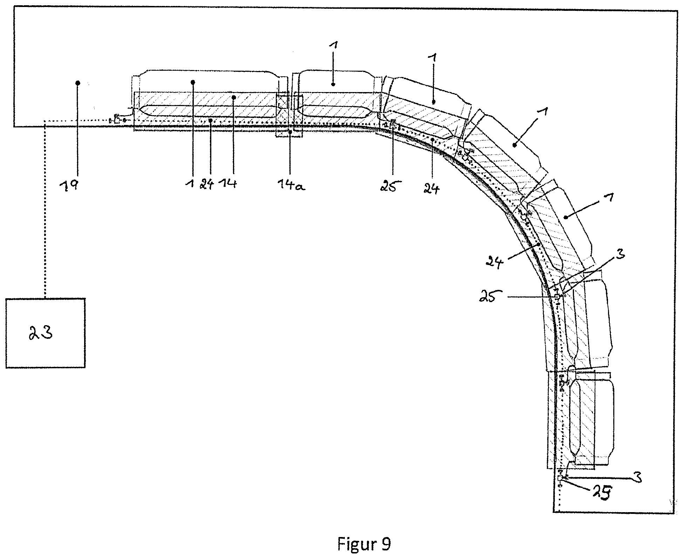

Figur 9 zeigt eine mögliche Anordnung von mehreren erfindungsgemäßen Vorrichtungen in einer Fuge 19, welche beispielsweise eine Bewegungsfuge sein kann. Grundsätzlich kann eine Fuge durch jeweils eine erfindungsmäße Vorrichtung abgedichtet sein, insbesondere dann, wenn diese in etwas der Form der Fuge entspricht. Je nachdem ob das Brandschutz-Hitzeschutz-Band 14 zwischen der unteren Fugenöffnung, beispielsweise von einer Deckenfuge, und dem Flachschlauchkissen 1 und/oder ob Quellvlies mit oder/ohne Zellkautschuk vorgesehen ist, kann es sich vorliegend um einen Schutz gegen Wasserfortleitung, einen Schutz gegen Hitzefortleitung oder um eine Kombination von beidem handeln. Erfindungsgemäß kann also auch eine Vorrichtung mit Quellvlies und/oder BHB vorgesehen sein.

Nach Figur 9 ist eine Fuge in einem Bogen beispielsweise für Brücken, Straßentunnel, Zug- oder S-Bandtunnel dargestellt. Grundsätzlich ist die Breite der Tunnel, in welchen die Anordnung von mehreren erfindungsgemäßen Vorrichtungen als Schutzmaßnahme vorgesehen ist, nicht beschränkt. Durch Kombination von einzelnen erfindungsgemäßen Vorrichtungen kann die Bogenform des Bauwerks inkrementell nachvollzogen werden und so die Fuge 19 vollständig gegen Wasserfortleitung und/oder Hitzefortleitung abgedichtet werden.

Um eine Fugenbewegung ausgleichen zu können, ist ein Druckausgleichssystem 23 vorgesehen, welches als Ventilationssystem ausgebildet sein kann. Die Bewegung der Fuge kann beispielsweise eine Scherbewegung der beiden Wandteile der Fuge 19 zueinander sein. Die Bewegung kann jedoch auch eine Bewegung der Wandteile voneinander weg oder zueinander sein.

Die einzelnen Flachschlauchkissen 1 der erfindungsgemäßen Vorrichtungen sind innerhalb der Fuge angeordnet, wobei in einem unteren Bereich, welcher der Fugenöffnung zugewandt ist, Brandschutz-Hitzeschutz-Band 14 zwischen der Fugenöffnung und dem Flachschlauchkissen 1 angeordnet ist. Einzelne BHB-Abschnitte 14 können jeweils einem einzelnen Flachschlauchkissen zugeordnet sein. Die einzelnen Flachschlauchkissen können zueinander mit einer Lücke, auf Stoß oder überlappend entlang der Fuge angeordnet sein. Es kann, insbesondere wenn eine Lücke zwischen der Flachschlauchkissen vorgesehen ist, ein Brandschutz-Hitzeschutz-Band als separate Überdeckung vorgesehen sein, welche eine Lücke schließt und so eine durchgängige Bahn an BHB gegenüber der Fugenöffnung bildet. Insbesondere um eine einheitliche Druckverteilung in den einzelnen Flachschlauchkissen bereitzustellen, können diese mit Ihrem jeweiligen Einfüllschlauch, vorzugsweise mit Autoventil, über ein System aus Verteiler 25 und Schläuche 24 in fluidischer Kommunikation zueinander stehen, wodurch diese bedarfsgerecht mit in etwa demselben Innendruck bereitgestellt werden können. Hierfür ist das Verteilersystem mit einem Druckausgleichsystem 23 versehen, welches auch als Ventilator System ausgebildet sein kann oder zumindest den Druck in den Flachschlauchkissen anpassen kann, vorzugsweise druckerniedrigend und/oder -erhöhend. Dieses System kann den einzelnen Flachschlauchkissen über das Verteilersystem zumindest in etwa denselben Innendruck bereitstellen, wodurch eine Druckerhöhung, bei einer Fugenbewegung, welche die Fugenbreite verringert, ausgeglichen werden kann. Bei einer Fugenbewegung, welche die Fugenbreite vergrößert kann zusätzlich Gas in die Flachschlauchkissen 1 befördert werden, um einen ausreichenden Anpressdruck zwischen dem Flachschlauchkissen 1 und dem Wandteil 18 wie er beispielsweise aus den Figuren 7 und 8 hervorgeht, bereitzustellen.

Insbesondere im Bogenbereich des Bauwerks sind die Flachschlauchkissen 1 überlappend dargestellt, wodurch eine lückenlose Oberfläche von BHB gegenüber der Fugenöffnung bereitgestellt ist.

Die vorliegende Erfindung beschreibt insbesondre ein flexibel anpassbares System mit einer Vorrichtung zur temporären Mehrweg-Abdichtung nach der vorliegenden Erfindung, mittels welchem bedarfsgerecht eine Fortleitung von Flüssigkeit, ein Schutz gegen Hitze oder beides bedarfsgerecht bereitstellbar ist, ohne große Konstruktive Änderungen an dem System vorgenommen werden müssen.

Weiterhin beschreibt die vorliegende Erfindung ein Verfahren zum Abdichten einer Fuge gegen Wasser, Rauch und/oder Hitze Fortleitung durch Vorsehen der erfindungsgemäßen Vorrichtung in der Fuge und befüllen desselbigen in der Fuge mit einem Fluid, insbesondere einem Gas oder Gasgemisch.

Besonders bevorzugt ist es in beliebiger Kombination von Zellkautschuk und/oder BHB vorgesehen, dass eine kreisförmige oder längsförmige Anordnung des Flachschlauchabdichtkissens (1) vorgesehen ist, wobei der Thermoplast-Einfüllschlauch (2a) für eine Summenleckrate von ≤ 2,7 mbarl/Jahr (Pa·m³·s⁻¹) im Heißsiegelschweißverfahren mit dem Flachschlauchabdichtkissen (1) verbunden ist, wobei die Dichtigkeit des Thermoplast-Einfüllschlauchs (2a) durch Verklemmen mittels Crimphülse (2b) in Kombination mit einer Crimpzange bis 3 bar überdruckdicht (4) erzielbar ist.

Besonders bevorzugt ist es in beliebiger Kombination von Zellkautschuk und/oder BHB vorgesehen, dass das Flachschlauchabdichtkissen (1) im Anwendungsbereich als Einzelelement voll- oder halbkreisförmig im Hohlraum-, Kabelschutzrohr- oder Wanddurchführungsumfang (8) oder in Dehn- und/oder Bewegungsfugen und Auflagerbänken angeordnet ist, wobei sich das Reifenventil (3) oder der Thermoplast-Einfüllschlauch (2a) mit zwei Crimphülsen mindestens an einem Ende des Flachschlauchabdichtkissens (1) befindet.

Besonders bevorzugt ist es in beliebiger Kombination von Zellkautschuk und/oder BHB vorgesehen, dass sie außenliegend in Längsrichtung zusätzlich ein elastisches, mit der Umgebung nicht dauerhaft selbstklebendes, unter Betriebsbedingungen bei Montagen bei fließendem oder stehendem Wasser mit der Umgebung nicht dauerhaft selbstklebendes modifiziertes Quellvlies-Zellkautschuk-Dichtband (5, 6a, 10, 11a, 11b) mit einem Flächengewicht von 400 g/m² bis 1.300 g/m² aufweist.

Besonders bevorzugt ist es in beliebiger Kombination von Zellkautschuk und/oder BHB vorgesehen, dass beim Abdichten von mit Kabeln (9) und/oder Rohren (9) durchzogenen Hohlräumen, Kabelschutzrohren oder Wanddurchführungen (8) im Bereich der Berührungsstellen von Kabeln (9) und/oder Rohren (9) eine Umwicklung aus einem kombinierten Quellvlies-Zellkautschuk-Dichtband (5, 10) mit bzw. ohne Klebefolie eingesetzt ist und sich im Innenraum Füllelemente oder Zell-kautschuk-Abdichtsterne (7a, 7b, 7c) befinden, die aus Dichtbandmaterial (10) hergestellt sind.

Besonders bevorzugt ist es in beliebiger Kombination von Zellkautschuk und/oder BHB vorgesehen, dass die Zellkautschuk-Abdichtsterne (7a), zum Einschieben zwischen Kabeln (9) und/oder Rohren (9), aus zwei übereinander gelegten Zellkautschuk-Abdichtbändern (10), umgelegten Quellvlies-Abdichtbändern (7b) mit einer ≥ 5 mm breiten Längsnaht (7c), hergestellt sind.

Besonders bevorzugt ist es in beliebiger Kombination von Zellkautschuk und/oder BHB vorgesehen, dass das Flachschlauchabdichtkissen (1) über ein Reifenventil (3) oder über den Thermoplast-Einfüllschlauch (2a) mit einem gasförmigen Medium (Luft) gefüllt ist und der bis 3 bar überdruckdichte Einfüllschlauch (2a) durch Verpressen mittels Crimphülse (2b) in Kombination mit einer Crimpzange hergestellt ist.

Besonders bevorzugt ist es in beliebiger Kombination von Zellkautschuk und/oder BHB vorgesehen, dass das Flachschlauchabdichtkissen (1) aus einem gefalteten Band oder Flachschlauch hergestellt ist, der je nach dem Anwendungsbereich aus Thermoplast, Elastomeren und/oder schwer entflammbaren Thermoplast-Elastomer-Gemischen besteht, wobei diese Stoffe metallische und/oder metallfreie Einlagen aufweisen.

Besonders bevorzugt ist es in beliebiger Kombination von Zellkautschuk und/oder BHB vorgesehen, dass das Band des Flachschlauchabdichtkissens (1) mit metallischer Einlage vorzugsweise mindestens aus einer fünflagigen Thermoplast-Verbundfolie mit dem Aufbau
- 100 bis 250 µm PE
- 10 bis 23 µm PET
- 9 bis 5 µm ALU
- 10 bis 23 µm PET
- 100 bis 250 µm PE
hergestellt ist.

Besonders bevorzugt ist es in beliebiger Kombination von Zellkautschuk und/oder BHB vorgesehen, dass das Flachschlauchabdichtkissen (1) mit metallischer Einlage eine Summenleckrate von 2,7 mbarl/Jahr und das dreilagig aufgebaute, metallfreie Abdichtkissen eine solche von ≤ 200 mbarl/Jahr aufweist.

Besonders bevorzugt ist es in beliebiger Kombination von Zellkautschuk und/oder BHB vorgesehen, dass das Flachschlauchabdichtkissen (1) aus einer dreilagigen Thermoplast-Verbundfolie ohne metallische Einlage mit dem Aufbau
- 100 bis 250 µm PE
- 9 bis 23 µm PET oder gleichwertige PBT, PPE, PP, Tyvek < 64,4 g/m² etc.
- 100 bis 250 µm PE
hergestellt ist.

Besonders bevorzugt ist es in beliebiger Kombination von Zellkautschuk und/oder BHB vorgesehen, dass für das Zellkautschuk-Dichtband (10, 11a, 11b, 6a) und den Zell-kautschuk-Abdichtstern (7a) aus Werkstoffen sogenannter Natur- und/oder Synthesekautschuk Elastomeren mit einer dem Anwendungsbereich vorgesehenen Schichtdicke von 2 bis > 10 mm mit einem zugfesten Quellvlies-, Textil-, Kunststoff- oder Glasfasergewebe im Zentrum oder an den Rändern, einseitig ohne/mit doppelseitig klebendem Dichtband versehen, hergestellt werden.

### Bezugszeichenliste

- 1: Flachschlauchabdichtkissen
- 2a: Thermoplast-Einfüllschlauch
- 2b: Crimphülse mit Crimpzange verpresst
- 3: Reifenventil
- 4: Abdichtkissen-Luft-Überdruckfüllung
- 5: Selbstklebendes Zellkautschuk-Dichtband, Dicke 2 bis 3 mm, umlaufende Teilbeschichtung
- 6a: Modifiziertes Quellvlies-Zellkautschuk-Dichtband mit/ohne selbstklebendem zugfestem Gewebe, Dicke 6 bis 11 mm, vollflächige Beschichtung
- 6b: Ausgestanzte Zuglöcher
- 7a: Zellkautschuk-/4-Kammer-Abdichtstern 400 g/m²
- 7b: Umlaufendes Quellvlies-Dichtband 200g/m²
- 7c: Eine Längsnaht
- 8: Mantelrohr, Hohlraum, Kabelschutzrohr, Wanddurchführung
- 9: Kabel, Rohr
- 10: Kombination Quellvlies-Zellkautschuk-Dichtband 2 bis 3 mm oder 6 bis 10 mm
- 11a: Modifiziertes zugfestes Quellvlies-Zellkautschuk-Dichtband
- 11b: Gewebeeinlage
- 12: Quellvlies
- 13: Gasraum in Flachschlauchabdichtkissen
- 14: Brandschutz-Hitzeschutz-Band
- 14a: Brandschutz-Hitzeschutz-Band Überdeckung
- 15: Abstand für Hitzeschutzkammer
- 16: Flachschlauchabdichtkissenhöhe
- 17: Bereich des Flachschlauchabdichtkissens, der in etwa parallel zu einem Wandteil einer Fuge geführt ist
- 18: Wandteil
- 19: Fuge
- 20: Kontaktbereich des Montagehilfsmittels mit dem Wandteil
- 21: Kontaktbereich des BHB mit dem Wandteil
- 22: Montagehilfsmittel
- 23: Druckausgleichsystem/Ventilatorensystem
- 24: Schlauch
- 25: Verteiler

## Patentansprüche

1. Vorrichtung zur temporären Mehrweg-Abdichtung für Montagen, insbesondere bei fließendem oder stehendem Wasser, gegen Wassereintritt, Rauchdurchdringung und/oder Hitzeschutz in Fugen mit zumindest zwei gegenüberliegenden Wandteilen, insbesondere Zwischenräumen, Hohlräumen, Kabelschutzrohren oder Wanddurchführungen (8), die mit Kabeln (9) und/oder Rohren (9) belegt sind, oder in Dehn- und/oder Bewegungsfugen, Auflagerbänken,
**dadurch gekennzeichnet,**
**dass** die Vorrichtung ein in der Länge und Breite festgelegtes Flachschlauchabdichtkissen (1) aufweist, das als Zwischenraumabdichtung an seinen Außenseiten mit mindestens einem Brandschutz-Hitzeschutz-Band (14) und/oder Zellkautschuk-Dichtband (5 oder 6a), welche vorzugsweise mit Quellvlies modifiziert sind, ausgerüstet ist, das an einer Breitseite mit einem Reifenventil (3) oder Thermoplast-Einfüllschlauch (2a) verschweißt ist, das mit einem gasförmigem Medium befüllt (4) und überdruckdicht mit einer Crimphülse (2b) in Kombination mit einer Crimpzange verschlossen ist, wobei das Flachschlauchabdichtkissen mit einer Leckrate von ≤ 8,561643835616438·10⁻⁸ Pa·m³·s⁻¹ bereitgestellt ist, und
**dass** die Vorrichtung zwischen den Wandteilen der Fuge vorsehbar ist.

2. Vorrichtung nach Anspruch 1,
**dadurch gekennzeichnet,**
**dass** das Brandschutz-Hitzeschutz-Band (14) an der Vorrichtung in zumindest einem Kontaktbereich mit den Wandteilen der Fuge, insbesondere seitlich an dem Flachschlauchkissen, angeordnet ist.

3. Vorrichtung nach einem der Ansprüche 1 oder 2,
**dadurch gekennzeichnet,**
**dass** nicht mehr als 50% des Kontaktbereichs der Vorrichtung mit den Wandteilen der Fuge von dem Brandschutz-Hitzeschutz-Band (14) bedeckt sind, vorzugsweise das Brandschutz-Hitzeschutz-Band (14) die halbe Höhe des Flachschlauchkissens entlang einer Längsrichtung desselbigen nicht übersteigt.

4. Vorrichtung nach einem der Ansprüche 1 bis 3,
**dadurch gekennzeichnet,**
**dass** das Brandschutz-Hitzeschutz-Band (14) an mindestens einer Außenseite ein selbstklebendes Haftmittel aufweist, die vorzugsweise dem Flachschlauchkissen zugewandt ist.

5. Vorrichtung nach einem der Ansprüche 1 bis 4,
**dadurch gekennzeichnet,**
**dass** das Brandschutz-Hitzeschutz-Band (14) eine definierte Expansionsbeginn-Temperatur, vorzugsweise von ca. 145° C, aufweist, bei Hitzeeinwirkung schnell aufblähend und mit einem, vorzugsweise großen Blähvolumen bereitgestellt ist, vorzugsweise Blähfaktor 10-10.000.

6. Vorrichtung nach einem der Ansprüche 1 bis 5,
**dadurch gekennzeichnet,**
**dass** das Brandschutz-Hitzeschutz-Band (14) bei Hitzekontakt einen wärmedämmenden Schaum oder Masse ausbildet, welcher die Fuge, vorzugsweise nach außen hin, insbesondere im Bereich des Brandschutz-Hitzeschutz-Band (14), füllt.

7. Vorrichtung nach einem der Ansprüche 1 bis 6,
**dadurch gekennzeichnet**
**dass** Brandschutz-Hitzeschutz-Band (14) bei Hitzekontakt in der Fuge einen an die Fugenform angepassten 3-dimensionalen Ausdehnungskörper in der Fuge bildet, wobei das Brandschutz-Hitzeschutz-Band, vorzugsweise sich in Richtung einer Hitzequelle, an Volumen zunimmt.

8. Vorrichtung nach einem der Ansprüche 1 bis 7,
**dadurch gekennzeichnet,**
**dass** das Brandschutz-Hitzeschutz-Band (14) ein Brandverhalten nach DIN 4102 (Stand 2018) aufweist.

9. Vorrichtung nach einem der Ansprüche 1 bis 8,
**dadurch gekennzeichnet,**
**dass** das Brandschutz-Hitzeschutz-Band (14) zumindest den Teil der Vorrichtung überdeckt, welcher im eingebauten Zustand mindestens einer Fugenöffnung zugewandt ist.

10. Vorrichtung nach einem der Ansprüche 1 bis 9,
**dadurch gekennzeichnet,**
**dass** die Vorrichtung mindestens zwei Flachschlauchabdichtkissen (1) aufweist, welche sandwichartig, insbesondere auf Stoß oder Versetzt, vorzugsweise zwischen zwei gegenüberliegenden Wandteilen der Fuge, angeordnet sind, wobei das Brandschutz-Hitzeschutz-Band (14) die mindestens zwei Flachschlauchabdichtkissen (1) mindestens gegenüber einer Fugenöffnung überspannt.

11. Vorrichtung nach einem der Ansprüche 1 bis 10,
**dadurch gekennzeichnet,**
**dass** das Brandschutz-Hitzeschutz-Band (14) zumindest in einem Bereich mit einem Abstand zu dem Flachschlauchabdichtkissen (1) angeordnet ist, vorzugsweise an zwei gegenüberliegenden Seiten des Flachschlauchabdichtkissens (1) mit diesem verbunden ist und in einem Bereich zwischen den gegenüberliegenden Seiten schlaufenartig von dem mindestens einen Flachschlauchabdichtkissen (1) beabstandet ist.

12. Vorrichtung nach einem der Ansprüche 1 bis 11,
**dadurch gekennzeichnet,**
**dass** in einem Bereich auf dem Flachschlauchabdichtkissen (1), in welchem kein Brandschutz-Hitzeschutz-Band (14) vorgesehen ist und das einem Wandteil zuwendbar ist, ein Montagehilfsmittel, insbesondere ein Quellvlieselement und/oder ein Zellkautschukelement, vorgesehen ist.

13. Vorrichtung nach einem der Ansprüche 1 bis 12,
**dadurch gekennzeichnet,**
**dass** zumindest in einem Bereich auf dem Flachschlauchabdichtkissen (1), in welchem das Brandschutz-Hitzeschutz-Band (14) auf dem Flachschlauchabdichtkissen (1) vorgesehen ist, zwischen Flachschlauchabdichtkissen (1) und Brandschutz-Hitzeschutz-Band (14) Quellvlies angeordnet ist.

14. Vorrichtung nach einem der Ansprüche 1 bis 13,
**dadurch gekennzeichnet,**
**dass** zwischen den einzelnen Flachschlauchabdichtkissen (1) der Vorrichtung Quellvlies angeordnet ist.

15. Vorrichtung nach einem der Ansprüche 1 bis 14,
**dadurch gekennzeichnet,**
**dass** die einzelnen Flachschlauchabdichtkissen (1) im verbauten Zustand der Vorrichtung in einem Kontaktbereich mit einer Fugenwand Quellvlies aufweisen.
